# EUROPÄISCHE PATENTSCHRIFT

(11) **EP 2 651 192 B1**
(45) Veröffentlichungstag und Bekanntmachung des Hinweises auf die Patenterteilung: **06.05.2020**
(21) Anmeldenummer: 13153561.9
(22) Anmeldetag: 31.01.2013
(51) Int. Cl.: H05B 37/02, H05B 33/08, F21S 9/03, F21V 23/04

(54) **Sensorleuchtenvorrichtung und Verwendung einer solchen**
Sensor light device and use of same
Dispositif à lampes à capteurs et utilisation de celui-ci

(30) Priorität: 12.04.2012 DE 102012103170
(43) Veröffentlichungstag der Anmeldung: 16.10.2013
(73) Patentinhaber: Steinel GmbH, 33442 Herzebrock (DE)
(72) Erfinder: Möller, Thomas, 32049 Herford (DE)
(74) Vertreter: Müller Hoffmann & Partner

(56) Entgegenhaltungen:
- EP-A1- 1 881 261
- WO-A1-92/18804
- WO-A2-2010/057138
- DE-A1- 3 843 480
- US-A- 4 890 093
- US-A1- 2010 328 933
- US-A1- 2011 260 880
- US-A1- 2012 026 726
- US-A1- 2012 026 733

## Beschreibung

Die vorliegende Erfindung betrifft eine Sensorleuchtenvorrichtung nach dem Oberbegriff des Hauptanspruchs. Ferner betrifft die vorliegende Erfindung eine Verwendung einer solchen Sensorleuchtenvorrichtung.

Sensorleuchtenvorrichtungen nach dem Oberbegriff des Hauptanspruchs sind aus dem Stand der Technik allgemein bekannt und werden als bewegungsgesteuerte Innen- und Außenleuchten in großer Stückzahl im privaten und gewerblichen Umfeld eingesetzt. Eine typischerweise auf Infrarotbasis unter Nutzung eines Passiv-InfrarotSensors (PIR) wirkende Bewegungssensoreinheit reagiert dabei auf bewegungsbedingte Änderungen im Infrarotbild eines Erfassungsbereichs und aktiviert als Reaktion auf eine detektierte Bewegung (etwa einer Person) die Leuchtmitteleinheit, welche wiederum für eine typische Mindestleuchtzeit als Aktivierungszeitraum aktiviert bleibt, sofern nicht innerhalb dieses Aktivierungszeitraums weitere Bewegungen (entsprechend dann die Einschaltzeit verlängernd) detektiert werden.

Derartige etablierte Technologien sind geeignet, den elektrischen Energieverbrauch für Beleuchtungszwecke teils signifikant herabzusetzen, insbesondere wenn durch derartige gattungsbildende Leuchtenvorrichtungen zu beleuchtende Bereiche nicht permanent aktiviert werden müssen, sondern etwa lediglich im Fall einer sich dort bewegenden Person. Neben einer bewegungssensorgesteuerten Aktivierung der Leuchtmitteleinheit ist zudem die Aktivierung dieser Leuchtmittel häufig abhängig von einer detektierten Umgebungshelligkeit; zu diesem Zweck sind gattungsbildende Vorrichtungen mit Umgebungshelligkeitserfassungsmitteln (etwa in Form einer üblichen Photodiode) versehen, welche (zusätzlich häufig geeignet Eigenlicht kompensierend) eine Aktivierung der Leuchtmitteleinheit unterdrücken, wenn etwa eine Umgebungshelligkeit (z.B. Tageslicht im Außenbereich) den Leuchtmittelbetrieb unnötig macht.

Allerdings weisen gattungsgemäße, in der Regel netzgebundene Sensorleuchtenvorrichtungen den potentiellen Nachteil auf, an zukünftigen Einsatz- oder Montageorten von dort vorhandenen bzw. gezielt zu verlegenden Netzversorgungsleitungen abhängig zu sein. Mithin ist gerade in Außenbereichen die Flexibilität der Montier- und Einsetzbarkeit durch die Notwendigkeit der Kabelverlegung eingeschränkt, wobei etwa in Gärten oder Parks (wo typischerweise keine einfach zugreifbaren Versorgungskabel liegen bzw. erst lange Strecken verlegt und damit überbrückt werden müssen) dieser Flexibilitätsnachteil besonders deutlich zum Tragen kommt. Auch erschwert die Notwendigkeit des Netzversorgungsanschlusses eine leichte Veränderbarkeit bzw. Portierbarkeit gattungsgemäßer Sensorleuchtenvorrichtungen; eine etwa flexibel vorzunehmende Änderung des Einsatzortes einer solchen Leuchte wird entsprechend durch die Notwendigkeit, das Netzkabel gleichermaßen zu verlegen bzw. anzupassen, erschwert.

Als aus dem Stand der Technik vorauszusetzen sind ferner Leuchtenanordnungen, bei welchen eine solche Flexibilität am Einsatzort erreicht wird durch zugeordnete Akkus in Form von Energiespeichermitteln; bekannt sind derartige Leuchteneinsätze etwa im Zusammenhang mit der Beleuchtung von Baustellen im Straßenverkehr. Allerdings sind derartige Leuchtenvorrichtungen typischerweise für einen Dauerbetrieb eingerichtet, weisen regelmäßig keine Bewegungssensortechnologien auf und verfügen üblicherweise über höchst voluminöse elektrische Energiespeichermittel, welche zwar für einen Baustellenzweck tauglich sind, insbesondere jedoch für Einsätze im privaten Bereich weder ästhetisch, noch funktional-praktisch einsetzbar sind.

Die WO 92/18804 A1 offenbart eine mittels einer Solarzelle betriebene Leuchte mit Bewegungsmelder. Die US 2012/0026726 A1 offenbart die Möglichkeit, solarzellenbetriebene mittels Bewegungsmeldern ansteuerbare Leuchten hinsichtlich verschiedener Betriebsparameter drahtlos zu steuern. Die US 2012/0026733 A1 offenbart eine Leuchte, die ihre Farbtemperatur basierend auf einer Bewegungsdetektion verändert. Die DE 38 43 480 A1 offenbart eine solarzellenbetriebene Schilderbeleuchtung. Die WO 2010/057138 A1 offenbart solarzellenbetriebene Leuchten mit Bewegungsmeldern, die derart gesteuert werden, dass der Energieverbrauch der Leuchten bei ausreichender Funktionalität minimiert wird. Die US 2010/0328933 A1 offenbart flexibel anbringbare solarzellenbetriebene Leuchten, die aus Helligkeitsmessungen selbst die Tageszeit bestimmen können. Die EP 1 881 261 A1 beschreibt eine batteriebetriebene Leuchte mit Bewegungsmelder, bei der ein Ladezustand der Batterie angezeigt werden kann.

Aufgabe der vorliegenden Erfindung ist es , eine gattungsgemäße Sensorleuchtenvorrichtung im Hinblick auf ihre einfache, universelle und flexible Einsetzbarkeit, insbesondere außerhalb eines Netzspannungsversorgungskontexts, zu verbessern, dabei insbesondere die Anforderungen an (potentiell großvolumige) elektrische Energiespeichermittel zu minimieren, so dass insoweit verminderter konstruktiv-technischer Aufwand mit den Möglichkeiten, ästhetisch ansprechende Vorrichtungen zu schaffen, kombiniert werden soll. Insbesondere ist eine Sensorleuchtenvorrichtung zu schaffen, welche im Hinblick auf die erforderliche elektrische Energieversorgung Autarkie über einen möglichst langen Zeitraum erreicht, dabei gleichermaßen unbeschränkt im Hinblick auf eine zuverlässige Bewegungserfassung und einen ordnungsgemäßen Leuchtenbetrieb der Leuchtmitteleinheit ist.

Die Aufgabe wird durch die Sensorleuchtenvorrichtung mit den Merkmalen des Hauptanspruchs gelöst. Vorteilhafte Weiterbildungen der Erfindung sind in den Unteransprüchen beschrieben.

Einem Gehäuse der Sensorleuchtenvorrichtung sind zur Energieversorgung Photovoltaikmittel zugeordnet, typischerweise realisiert als Solarpanel oder dergleichen Anordnung, deren bei Beleuchtung erzeugte Energie in elektrischen Energiespeichermitteln der Leuchtenvorrichtung (typischerweise eine geeignete Akku-Vorrichtung) gespeichert werden kann. Die Steuermittel der Sensorleuchtenvorrichtung sind so ausgestaltet, dass in der Realisierung der möglichst langen und weiterbildungsgemäß vollständig netzspannungs- bzw. netzversorgungsfreien Technologie die von den Energiespeichermitteln gespeicherte und vom Betrieb der Vorrichtung bereitgestellte Energie optimal genutzt wird; einerseits mit dem Vorteil, den notwendigen Akku (bzw. die Akku-Kapazität) aus Effizienz- und Platzgründen möglichst klein bzw. kompakt zu gestalten, andererseits bei vorhandenen Akku-Kapazitäten eine möglichst große Lichtleistung der Leuchtmitteleinheit zu gewährleisten. In erfindungsgemäß vorteilhafter Weise erreichen die Steuermittel dies dadurch, dass zum einen entsprechend einem aktuellen Ladezustand bzw. Energiespeicherzustand der Energiespeichermittel, ergänzend oder alternativ einem aktuellen Zeitsignal (entsprechend etwa einer aktuellen Uhrzeit bzw. Systemzeit, alternativ etwa einer aktuellen Zeitposition innerhalb einer Tages- und/oder Nachtperiode) eine Variierung eines Leuchtmittelaktivierungszeitraumes erfolgt, ergänzend oder alternativ eine Aktivierung einer Lichtstärke der Leuchtmitteleinheit (in beiden Fällen jeweils als Reaktion auf eine Aktivierung der Leuchtmitteleinheit bei erfasster Bewegung durch die Bewegungssensoreinheit).

Erfindungsgemäß hat sich nämlich herausgestellt, dass gerade durch die Anpassung dieser Steuergrößen in besonders wirksamer Weise Verbrauchsökonomie der in den elektrischen Energiespeichermitteln gespeicherten Energie betrieben werden kann; so kann etwa, bei einem relativ niedrigen Ladestand (Energiespeicherniveau) ein Aktivierungszeitraum der Leuchtmittel kurz gehalten werden, um insoweit zwar eine Mindestfunktionalität der Beleuchtung sicherzustellen, gleichzeitig jedoch bestmöglich Energie einzusparen. Gleichzeitig oder alternativ kann bei einem solchen Energievorratsstand eine Lichtstärke (Leuchtmittelhelligkeit) der Leuchtmitteleinheit abgesenkt werden, was wiederum zwar die gewünschte Mindestfunktionalität sicherstellen kann, gleichzeitig jedoch elektrischen Energieverbrauch einschränkt. Umgekehrt kann dagegen ein oberhalb eines geeigneten Schwellwerts liegendes Energiespeicherniveau genutzt werden, um komfortwirksam oder dekorativ wirksam Leuchtdauer (in Form eines verlängerten Aktivierungszeitraums) bzw. Leuchtmittelhelligkeit zu erhöhen.

Auf diese Weise ermöglichen die erfindungsgemäßen Steuermittel ein elegantes, komfortables und autarkes Energiemanagement, welches insbesondere adaptiv auf verschiedenste Alltagssituationen im Leuchtenbetrieb, insbesondere im Außenbereich, reagieren kann: So würden etwa schwache bzw. dunkle Umgebungshelligkeitsbedingungen bei bedecktem Himmel oder zur Winterzeit entsprechend sparsame Leuchtbetriebsvorgaben auslösen können, gleichzeitig jedoch die praktische Funktionsfähigkeit der Vorrichtung auch während solcher Umgebungsbedingungen sicherstellen können. Auch wenn es im Rahmen geeigneter Weiterbildungen der Erfindung sinnvoll und vorgesehen sein kann, einer erfindungsgemäßen Sensorleuchtenvorrichtung einen (zeitweisen, etwa für eine zusätzliche Ladung) oder dauerhaften Netzanschluss zuzuweisen, ist im Idealfall eine erfindungsgemäße Sensorleuchtenvorrichtung in der Weiterbildung vollständig autark und benötigt keinen Netzspannungsanschluss (sofern die Vorrichtung mit einer Mindestenergie für eine Inbetriebnahme und dann erste Ladungsaktivitäten ausgeliefert oder durch den Benutzer vor der ersten Inbetriebnahme eine Mindestenergie in den Akkumulator geladen wird).

Gerade in einem Dauerbetrieb bzw. im Rahmen einer montierten Infrastruktur ist es vorteilhaft, dass die Betriebsfähigkeit der erfindungsgemäßen Vorrichtung (auch im deaktivierten Zustand der Leuchtmitteleinheit) extern erkennbar ist. Aus diesem Grund ist es weiterbildungsgemäß vorgesehen und bevorzugt, dem Gehäuse geeignete Indikatormittel zuzuordnen, etwa in Form einer geeignet leuchtenden oder blinkenden LED, welche einen betriebsbereiten Zustand anzeigt. Weiter vorteilhaft kann eine solche Indikatorfunktionalität verbunden werden mit den Steuermitteln zugeordneten Energiespeicherzustands-Erfassungsmitteln (also etwa einer aktuellen Akku-Spannungserfassung), so dass etwa gewisse Anzeigeparameter, etwa eine Blinkfrequenz oder dergleichen, noch konkreter Aufschluss geben über einen aktuellen Zustand der erfindungsgemäßen Energiespeichermittel.

Im Rahmen der vorliegenden Erfindung ist es vorteilhaft, die Leuchtmitteleinheit selbst als LED-Anordnung auszubilden; nicht nur liegt hier eine relativ lichtstarke und energieverbrauchsarme Beleuchtungstechnologie vor, auch ermöglichen derartige Leuchtmittel, insbesondere in einer weiterbildungsgemäßen Ausgestaltung und Ansteuerbarkeit in Gruppenform, wiederum weiterbildungsgemäß ausgerichtet auf verschiedene Beleuchtungsbereiche, eine hohe Flexibilität in der Ansteuerung und im Betrieb, verbunden mit hoher Ausfallssicherheit und langer Lebensdauer der Leuchtmittel.

Im Rahmen bevorzugter Ausführungsbeispiele und Einsatzformen der Erfindung kann es sinnvoll sein, einen Betriebsmodus der Leuchtmitteleinheit (bzw. eines Teils der Leuchtmitteleinheit, etwa separat zugewiesenen LED-Gruppen) vorzusehen, welcher einen Dauerbetrieb ermöglicht (wobei als "Dauerbetrieb" auch ein lang anhaltender Betrieb etwa während einer Dunkel- oder Nachtperiode, gleichwohl unterbrochen dann von einem Tages- bzw. Helligkeitszeitraum, umfasst sein soll). Etwa im Gebäudekontext ist eine derartige Funktionalität günstig, um - geeignet auf niedrige Beleuchtungsstärke gedimmt bzw. mit lediglich wenigen LED-Leuchtmitteln - eine verbrauchsarme, gleichwohl dauerhafte Hausnummernbeleuchtung im Dunkeln sicherzustellen, während weitere Leuchtmittel der Leuchtmitteleinheit dann in der erfindungsgemäßen Weise bewegungsgesteuert aktiviert werden können.

Eine besonders elegante Funktionalität der vorliegenden Erfindung liegt darin, die zur Umgebungshelligkeitserfassung genutzten Umgebungshelligkeitserfassungsmittel nicht nur als Kriterium für ein Aktivieren der Leuchtmitteleinheit (bei entsprechend dunklen Umgebungsbedingungen) zu nutzen, vielmehr liegt es im Rahmen bevorzugter Realisierungsformen der Erfindung, das Signal der Umgebungshelligkeitserfassungsmittel kontinuierlich bzw. periodisch auszuwerten und so aus Veränderungen dieses Signals das erfindungsgemäße Zeitsignal zu generieren, etwa in Form eines konkret bekannten Tag-Nacht-Verlaufs, eingeschlossen eines aktuellen Zeitpunkts, in welchem sich der Betrieb der Vorrichtung jeweils befindet. Nicht nur macht diese Funktionalität einen gesonderten (etwa zusätzlich aufwändigen und fehlerträchtigen) Zeitgeber potentiell überflüssig, auch wird durch ein derartiges, kontinuierliches Erfassen und Bewerten der Umgebungshelligkeit in automatischer Weise eine Anpassung an jahreszeitliche Schwankungen oder dergleichen Einflüsse realisiert. Dieses erfindungsgemäß erzeugte Zeitsignal (etwa entsprechend eines aus dem Umgebungshelligkeitsverlauf gewonnenen Tag-Nacht-Rhythmus und der daraus gewonnenen aktuellen Zeitposition) ist dann wieder Basis für aktuelle Entscheidungen und Steuervorgänge der Steuermittel, ob etwa (überhaupt) die Leuchtmitteleinheit zu aktivieren ist, oder wie die Aktivierung stattfinden soll (d.h. mit welcher Mindestleuchtdauer und/oder mit welcher Leuchtstärke).

Während es etwa bei aus dem Stand der Technik bekannten Technologien notwendig ist, die Umgebungshelligkeitserfassungsmittel mithilfe eines LDR, Fototransistors oder dergleichen Lichtsensorelements zu realisieren, liegt es im Rahmen bevorzugter Ausführungsformen der vorliegenden Erfindung, zumindest eine Teilfunktionalität der Umgebungshelligkeitserfassungsmittel (etwa eine grobe Tag-Nacht-Unterscheidung) durch ein Ausgangssignal der Photovoltaikmittel selbst zu realisieren, also etwa durch eine Zellspannung, einen Zellstrom oder dergleichen elektrische Ausgangsgröße der Mittel (bzw. einer geeigneten Teilzelle). Für eine genauere Umgebungshelligkeitserfassung kann dann gleichwohl ein Fototransistor oder dergleichen Spezialelement zusätzlich (oder alternativ) eingesetzt werden, auch können weiterbildungsgemäß geeignete Maßnahmen zur Eigenlichtkompensation für die Umgebungshelligkeitserfassungsmittel vorgesehen werden, mit welchen der Umstand berücksichtigt wird, dass bei aktiviertem Zustand der Leuchtmitteleinheit eine zusätzliche Lichtmenge (nämlich der Leuchtmitteleinheit) auf die Umgebungshelligkeitserfassungsmittel fällt und so potentiell deren zukünftige Detektorfunktion (und etwa die damit ermöglichte Deaktivierung) unterdrücken könnte; diese Maßnahmen sind als solche aus dem Stand der Technik bekannt und sind etwa in Form einer verschiebbaren Schwellwertlösung oder dergleichen Technologien umsetzbar.

Besonders interessant und potentiell nutzbar sind den Steuermitteln weiterbildungsgemäß zugeordnete Mittel zur Erzeugung von Ladeerwartungssignalen und/oder Bewegungserwartungssignalen: Die typischerweise mittels einer geeigneten Mikrocontroller- bzw. Mikroprozessoreinheit realisierten Steuermittel sind weiterbildungsgemäß günstig geeignet, in geeignet programmierter Form das Bewegungserfassungsverhalten der Sensorleuchtenvorrichtung der Vergangenheit zu überwachen und etwa zeitlich zu speichern und zu bewerten; aus einer solchen Vergangenheitsüberwachung lassen sich dann (wiederum zeit- bzw. zeitraumabhängige) Wahrscheinlichkeits- und Erwartungswerte berechnen, welche (etwa von verschiedensten Faktoren wie etwa Tag-, Nachtzeit, Jahreszeit usw. abhängig) Vorhersagen über zukünftige Auslösungen (Bewegungen) in einem zu überschauenden Zeitraum ermöglichen: So lassen sich etwa zu Beginn einer (keine Aufladung der Energiespeichermittel ermöglichenden) Nacht- bzw. Dunkelperiode, deren Dauer gleichwohl bekannt ist, auf der Basis von Bewegungserwartungswerten Vorhersagen über einen während dieser Dunkelperiode zu erwartenden Energieverbrauch treffen, welche wiederum Einfluss haben auf die Lichtstärkehelligkeit der Leuchtmitteleinheit bzw. deren (Mindest-) Aktivierungsdauer bei Aktivierung. In analoger Anwendung gestatten die Ladeerwartungssignale eine technische Prognose, mit welchen elektrischen Ladungsbeiträgen für den zukünftigen Ladebetrieb der elektrischen Energiespeichermitteln gerechnet werden kann, so dass insoweit wiederum in intelligenter Weise mit aktueller und zukünftiger gespeicherter elektrischer Energie durch geeignete Steuerung von Leuchtstärke und/oder Leuchtdauer disponiert werden kann.

Im Ergebnis bietet damit die vorliegende Erfindung in überraschend einfacher und leistungsfähiger Weise die Möglichkeit, autarke und hochgradig zuverlässige, betriebssichere Leuchtenvorrichtungen für eine Vielzahl von Anwendungsbereichen und Einsatzgebieten zu schaffen. Dabei ist insbesondere der Einsatz in einem (insbesondere regulärer Netzkabelversorgung nicht oder nur mit Schwierigkeiten zugänglichen) Außenbereich bevorzugt, die vorliegende Erfindung ist jedoch weder auf einen solchen Einsatzfall beschränkt, noch etwa auf den Umstand, dass sämtliche der erfindungsgemäßen Aggregate in einem Gehäuse kombiniert sein müssen. Vielmehr ist die vorliegende Erfindung insbesondere auch geeignet, Sensorleuchtenvorrichtungen mit einer Mehrzahl von (separat vom Gehäuse) vorzusehenden Leuchtmitteleinheiten zu erfassen, wie auch etwa die Photovoltaikmittel physisch beabstandet (und lediglich etwa durch ein Kabel an das Gehäuse angebunden) sein können. Letztendlich bietet die vorliegende Erfindung die Gelegenheit zur Schaffung eines flexiblen und anpassbaren Systems, im Rahmen dessen insbesondere auch eine Mehrzahl erfindungsgemäßer Leuchtenvorrichtungen geeignet vorgesehen, ggf. weiter miteinander kommunizierend ausgebildet sein können.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: ein schematisches Blockschaltbild von wesentlichen Funktionskomponenten der Sensorleuchtenvorrichtung gemäß einer ersten bevorzugten Ausführungsform der vorliegenden Erfindung und
- Fig. 2, 3:: Perspektivansichten einer typischen körperlichen Realisierungsform der Sensorleuchtenvorrichtung der Fig. 1 als integrierte Einheit zur Befestigung an einer Hauswand oder dergleichen Träger.

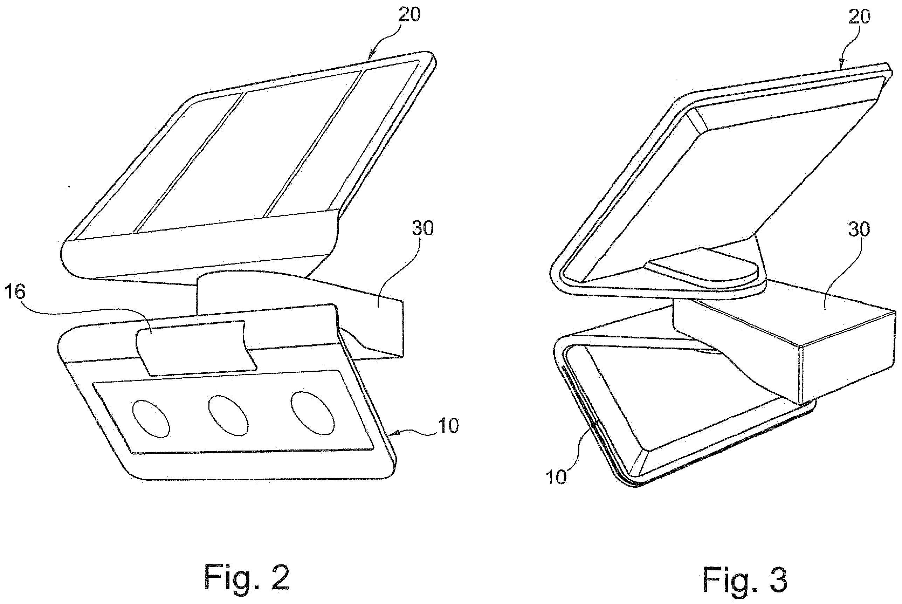

Die Figuren 2 bzw. 3 zeigen in der Perspektivdarstellung eine konkrete Realisierung der Sensorleuchtenvorrichtung gemäß einer ersten bevorzugten Ausführungsform der vorliegenden Erfindung. Die geometrischen bzw. konstruktiv-mechanischen Realisierungen dieser Technologie sind Gegenstand einer deutschen Gebrauchsmusteranmeldung 20 2012 100 891 der Anmelderin und sollen im Hinblick auf die gezeigten geometrischen, mechanisch-funktionellen, dimensions- und winkelmäßigen sowie materialmäßigen Details und Ausbildungen als zur Erfindung gehörig in die vorliegende Anmeldung einbezogen gelten. Dabei sind die wesentlichen Leuchtmittel- bzw. Gehäusekomponenten aufgenommen in einer sich im montierten Zustand der Vorrichtung (etwa an einer Hauswand) horizontal erstreckenden Halte- bzw. Trägereinheit 30, von welcher sich aufwärts-schräg geneigt ein Solarpanel 20 erstreckt, abwärts geneigt ein Leuchtmittelträger (LED-Panel) 10 mit eingesetztem Abschnitt und Öffnung für einen PIR-Sensor 16. Die auf geeigneten flächigen Trägereinheiten sitzenden Einheiten 20, 10 sind miteinander durch eine gemeinsame Achse verbunden und gegeneinander um diese Achse verdrehbar, so dass einfache Anpassbarkeit an Einsatzbedingungen am Montageort kombiniert werden kann mit einfacher mechanischer und wetterbeständiger Realisierbarkeit sowie ästhetisch ansprechender Formgebung.

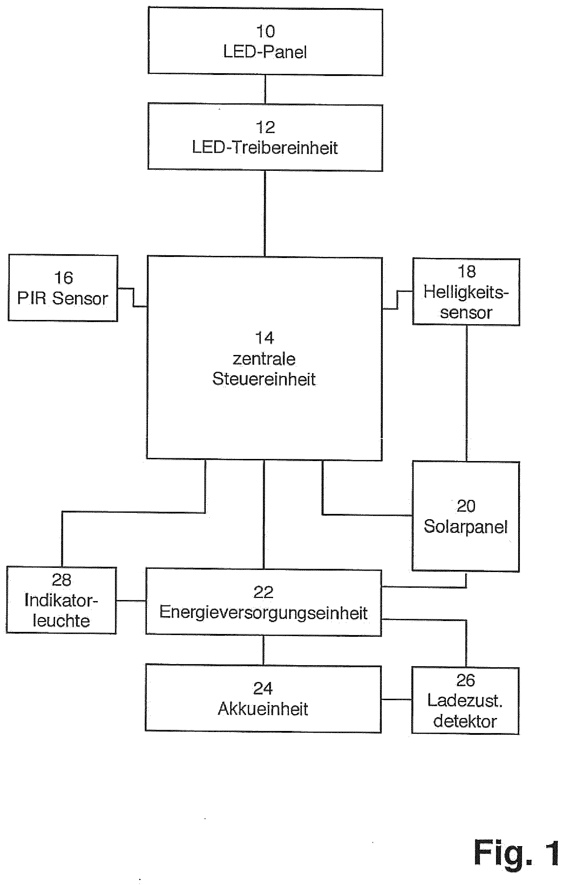

Die gehäuseartig ausgestaltete Trägereinheit 30 nimmt wesentliche Elemente der zentralen Steuereinheit 14 auf, deren Zusammenwirken mit weiteren Funktionskomponenten blockschaltbildartig in der Fig. 1 gezeigt ist. Typischerweise realisiert als Mikroprozessor- bzw. Mikrokontrollerbaugruppe mit geeigneter Programmierung wirkt die zentrale Steuereinheit 14 ansteuerseitig zusammen mit einer LED-Treibereinheit 12, welche wiederum in ansonsten bekannter Weise (gesamthaft oder gruppenweise) LEDs des LED-Panels 10 ansteuert. Die zentrale Steuereinheit verarbeitet dabei einerseits Eingangssignale eines Passiv-InfrarotSensors 16, welcher in ansonsten bekannter Weise reagiert auf in einem Erfassungsbereich dieser Sensoreinheit detektierte Wärmebildänderungen, welche dann in ein Erfassungssignal umgesetzt werden. Weiterhin abhängig ist ein Ansteuerbetrieb der zentralen Steuereinheit 14 von einer erfassten Umgebungshelligkeit eines Helligkeitssensors 18, welcher als LDR realisiert (in Fig. 2, Fig. 3 versteckt und daher nicht gezeigt) ein geeignet vor Eigenlicht des LED-Panels 10 geschütztes Umgebungshelligkeitssignal ausgibt. Im dargestellten Ausführungsbeispiel wird zudem das Zellenspannungssignal des Solarpanels 20 benutzt, um ein (grobes) Tag-/Nachtsignal zu erhalten, insoweit wirken zur Realisierung der erfindungsgemäßen Umgebungshelligkeitserfassungsmittel Helligkeitssensor 18 sowie Solarpanel 20 als Eingangsgrößen der zentralen Steuereinheit 14 zusammen.

Zur Energieversorgung der zentralen Steuereinheit 14 sowie der LED-Leuchtmitteleinheit 10 ist der zentralen Steuereinheit 14 eine netzspannungsfreie Infrastruktur bestehend aus einer Energieversorgungseinheit 22 sowie einer verbundenen Akku-Einheit 24 vorgeschaltet. Letztere, etwa realisiert mit geeigneten LiFePo-Akkumulatoren, ermöglicht insbesondere auch bei kalten Umgebungstemperaturen eine hohe Energiespeicherdichte und kompakte Abmessungen, wobei ein zugeordneter Ladezustandsdetektor 26 der Energieversorgungseinheit 22 (und mittelbar dadurch auch der zentralen Steuereinheit 14) eine aktuelle Ladezustandsinformation der Akku-Einheit 24 gibt. Nach außen sichtbar signalisiert wird der Ladezustand von einer Indikatorleuchte 28 in Form einer geeignet blinkenden bzw. im Dauerbetrieb leuchtenden roten LED 28, welche auch in einem deaktivierten Zustand des LED-Panels 10 einer Überwachungsperson, etwa durch geeignete Anordnung (nicht gezeigt) am Gehäuse 30 realisiert, die Betriebsbereitschaft und prinzipielle Funktionsfähigkeit der Vorrichtung anzeigt.

Insbesondere im Kontext der im Außenbereich (d.h. bei Tag-/ Nachteinfluss) erfolgenden solargestützten Ladung eines (gleichwohl gegen Überladung oder dergleichen Ansteuerfehler empfindlichen) Akkus erweist sich eine weitere vorteilhafte Weiterbildung der Erfindung, für welche auch als solche und ohne die Notwendigkeit von Leuchtmitteln bzw. einer Leuchtmitteleinheit Schutz beansprucht wird, als vorteilhaft: Wird nämlich (in einer praktischen Realisierung der Erfindung durch einen der Akkueinheit zugeordneten Ladezustandsdetektor) festgestellt, dass eine potenziell kritische Ladeschwelle (z.B. 90%) erreicht wird, wird etwa durch Deaktivieren eines Ladestroms bis zu einem Zeitpunkt dunkleren Lichtverhältnissen (d.h. und damit verbundenem niedrigeren Ladestrom durch die Solareinheit) das weitere Laden des Akkus unterbunden bzw. deaktiviert. Auf diese Weise lässt sich vorteilhaft insbesondere eine Hardware-aufwändige Stromregelung einsparen.

Der Betrieb der auf die vorbeschriebene Weise realisierten Vorrichtung des gezeigten Ausführungsbeispiels ist wie folgt: Nach einer ersten Montage am Einsatzort (typischerweise bei noch vorhandener Restladung der Akku-Einheit 24) sorgt zunächst das Solarpanel 20 in Verbindung mit der Energieversorgungseinheit 22 für eine Ladung der Akku-Einheit 24 bei hinreichend Ladestrom erzeugenden äußeren Beleuchtungsbedingungen. Der Ladezustandsdetektor 26 überwacht einen aktuellen Ladezustand; die Indikatorleuchte 28 verdeutlicht insoweit Leucht- und Betriebsbereitschaft der erfindungsgemäßen Vorrichtung.

Falls im Überwachungs- bzw. Erfassungsbereich des PIR-Sensors 16 eine für eine Aktivierung des LED-Panels 10 relevante Bewegung detektiert wird und die Helligkeitssensorvorrichtung 18 (bzw. ein aktueller Spannungspegel des Solarpanels 20) anzeigt, dass die Umgebungslichtbedingungen für eine LED-Aktivierung ausreichend dunkel sind, veranlasst die Steuereinheit 14 über die Treibereinheit 12 die Aktivierung des LED-Panels 10. Bei dieser Aktivierung wird eine Mindestleuchtdauer der Aktivierung eingestellt, welche abhängig ist von einen aktuell detektierten (26) Ladezustand der Akku-Einheit. Dieser Ladezustand beeinflusst auch eine aktuell von der zentralen Steuereinheit 14 gesteuerten Steuerstrom und damit, die Lichtstärke der LEDs des LED-Panels 10.

Zusätzlich auf diese Steuergrößen einen Einfluss hat vorteilhaft eine von der zentralen Steuereinheit 14 durchgeführte Überwachung des vergangenen Steuer-, Erfassungs- und Aktivierungsbetriebs der Vorrichtung. So hat etwa die zentrale Steuereinheit aufgrund der Aktivierungsvorgänge vorangegangener Zeitperioden eine Wahrscheinlichkeit zukünftiger Aktivierungen in einer zukünftigen (Dunkel-) Periode errechnet und entsprechend einem zugehörigen Energiebedarf gleichermaßen die LED-Lichtstärke und/oder die LED-Mindestaktivierungsdauer angepasst bzw. eingestellt. Zusätzlich vorteilhaft ist in dieses Steuerverhalten ebenfalls einbezogen das in der Vergangenheit als zeitlicher Verlauf bzw. Muster erfasste Verhalten der Ladezustandsentwicklung (genauer: in einem Zeitraum der Vergangenheit erfasste Lademuster), um insoweit zu erwartende Energiebeiträge des Solarpanels zur Ladung der Akku-Einheit 24 abzuschätzen.

Im Ergebnis entsteht damit ein hochgradig adaptives, flexibles und reaktionsfähiges System, welches auch unter problematischen Umgebungsbedingungen größtmögliche Betriebssicherheit und Sicherstellung eines solchen Betriebs gewährleistet.

Die vorliegende Erfindung ist nicht auf das gezeigte Ausführungsbeispiel beschränkt, lässt sich vielmehr in verschiedensten Einsatzbedingungen und Kontexten weiterentwickeln bzw. einem jeweiligen Beleuchtungsanspruch adaptieren.

## Patentansprüche

1. Sensorleuchtenvorrichtung aufweisend
ein Gehäuse (30);
eine Leuchtmitteleinheit (10);
eine Bewegungssensoreinheit (16) zum Ausgeben eines Bewegungserfassungssignals bei einer detektierten Bewegung;
Umgebungshelligkeitserfassungsmittel (18, 20) zum Erfassen der Umgebungshelligkeit;
Photovoltaikmittel (20);
elektrische Energiespeichermittel (24) zum Speichern der aus den Photovoltaikmitteln (20) erzeugten Energie; und
Steuermittel (14); wobei
die Photovoltaikmittel (20), die elektrischen Energiespeichermittel (24) sowie die Steuermittel (14) mit dem Gehäuse (30) verbunden sind,
die Leuchtmitteleinheit (10) geeignet ist, als Reaktion auf ein von der Bewegungssensoreinheit (16) ausgegebenes Bewegungserfassungssignal in einem bewegungsgesteuerten Betriebsmodus für die Dauer eines Aktivierungszeitraums aktiviert zu werden;
die Umgebungshelligkeitserfassungsmittel (18, 20) geeignet sind, einen Aktivierungsbetrieb der Leuchtmitteleinheit (10) zu beeinflussen,
die Steuermittel (14) ausgebildet sind, die Dauer des Aktivierungszeitraums und eine Lichtstärke der im bewegungsgesteuerten Betriebsmodus aktivierten Leuchtmitteleinheit (10) in Abhängigkeit von einem Energiespeicherzustand der elektrischen Energiespeichermittel (24) zu variieren;
**dadurch gekennzeichnet, dass**
die Steuermittel (14) ausgebildet sind, die Dauer des Aktivierungszeitraums und die Lichtstärke der im bewegungsgesteuerten Betriebsmodus aktivierten Leuchtmitteleinheit (10) ferner in Abhängigkeit von einem aus einer von den Umgebungshelligkeitserfassungsmitteln (18, 20) erfassten Umgebungshelligkeit ermittelten Zeitsignal zu variieren, wobei das ermittelte Zeitsignal einen aktuellen Zeitpunkt innerhalb einer Tages- und/oder Nachtperiode wiedergibt.

2. Sensorleuchtenvorrichtung nach Anspruch 1, wobei
eine Energieversorgung der Sensorleuchtenvorrichtung netzspannungslos und/oder ohne Verbindung zu einer Netzspannungsversorgung über die elektrischen Energiespeichermittel (24) erfolgt.

3. Sensorleuchtenvorrichtung nach Anspruch 1 oder 2, wobei
die Sensorleuchtenvorrichtung weiter Mittel (26) zur elektronischen Erfassung des Energiespeicherzustands der elektronischen Energiespeichermittel (24), wobei diese Mittel (26) mit den Steuermitteln (14) verbunden sind und/oder die Sensorleuchtenvorrichtung weiter Signalmittel zur insbesondere visuell wahrnehmbaren Anzeige eines oberhalb eines vorbestimmten Versorgungsschwellwerts liegenden Energiespeicherzustands der elektronischen Energiespeichermittel aufweist, wobei diese Signalmittel mit den Steuermitteln (14) verbunden sind.

4. Sensorleuchtenvorrichtung nach einem der Ansprüche 1 bis 3, wobei
die Leuchtmitteleinheit (10) eine Mehrzahl von LED-Leuchtmitteln aufweist und wobei die Steuermittel (14) ausgebildet sind, die Mehrzahl von LED-Leuchtmitteln mit einem änderbaren Steuerstrom zur Steuerung der Lichtstärke zu betreiben.

5. Sensorleuchtenvorrichtung nach einem der Ansprüche 1 bis 4, wobei
die Steuermittel (14) ausgebildet sind, die Leuchtmitteleinheit (10) zusätzlich in einem nicht bewegungsgesteuerten Betriebsmodus zu betreiben, wobei dieser Betriebsmodus einen umgebungshelligkeitsabhängigen und/oder vom ermittelten Zeitsignal abhängigen Dauerbetrieb der Leuchtmitteleinheit (10), unabhängig vom Bewegungserfassungssignal, insbesondere mit gegenüber einem Volllastbetrieb der Leuchtmitteleinheit (10) abgesenkter Lichtstärke, ermöglicht.

6. Sensorleuchtenvorrichtung nach Anspruch 4 oder 5, wobei
die Mehrzahl von LED-Leuchtmitteln gruppenweise als LED-Leuchtmittelgruppen angeordnet ist und die Steuermittel (14) ausgebildet sind, die LED-Leuchtmittelgruppen selektiv anzusteuern, um verschiedene Ausleuchtbereiche in einer Umgebung der Sensorleuchtenvorrichtung zu beleuchten.

7. Sensorleuchtenvorrichtung nach einem der Ansprüche 1 bis 6, wobei
die Photovoltaikmittel (20) als am Gehäuse, bevorzugt um mindestens eine Verstellachse, verstellbare Solarpaneleinheit (20) ausgebildet sind.

8. Sensorleuchtenvorrichtung nach einem der Ansprüche 1 bis 7, wobei
die Umgebungshelligkeitserfassungsmittel (18, 20) durch ein Ausgangssignal der Photovoltaikmittel (20) realisiert oder beeinflusst werden.

9. Sensorleuchtenvorrichtung nach einem der Ansprüche 1 bis 8, wobei
die Steuermittel (14) als Ladeerwartungssignalmittel für einen zukünftigen Ladebetrieb der elektrischen Energiespeichermittel (24) ausgebildet sind und ausgebildet sind, ein Ladeerwartungssignal zu erzeugen, wobei dieses Ladeerwartungssignal auf der Basis von erfassten minimalen, maximalen und/oder durchschnittlichen Ladeströmen der elektrischen Energiespeichermittel (24) und deren Zeitabhängigkeit eine geeignete Steuerung der Dauer des Aktivierungszeitraums und/oder der Lichtstärke der als Reaktion auf das Bewegungserfassungssignal aktivierten Leuchtmitteleinheit (10) ermöglicht.

10. Sensorleuchtenvorrichtung nach einem der Ansprüche 1 bis 9, wobei
die Bewegungssensoreinheit (16) einen Passivinfrarot-Detektor (16) aufweist und ein Betrieb der Bewegungssensoreinheit abhängig von dem ermittelten Zeitsignal und/oder der erfassten Umgebungshelligkeit ist.

11. Sensorleuchtenvorrichtung nach einem der Ansprüche 1 bis 10, wobei
ein Betrieb der Umgebungshelligkeitserfassungsmittel (18, 20) abhängig von dem ermittelten Zeitsignal ist.

12. Sensorleuchtenvorrichtung nach einem der Ansprüche 1 bis 11, wobei
die Steuermittel (14) als Bewegungserwartungssignalmittel für Vorhersagen über zukünftige Bewegungen in einem zu überschauenden Zeitraum ausgebildet sind und ausgebildet sind, ein auf der Basis vergangener Bewegungserfassungssignale der Bewegungssensoreinheit (16) und deren Zeitabhängigkeit für einen vorbestimmten zukünftigen Zeitraum geltendes Bewegungserwartungssignal zu erzeugen, wobei dieses Bewegungserwartungssignal eine geeignete Steuerung der Dauer des Aktivierungszeitraums und/oder der Lichtstärke der als Reaktion auf das Bewegungserfassungssignal aktivierten Leuchtmitteleinheit (10) ermöglicht.

13. Verwendung der Sensorleuchtenvorrichtung nach einem der Ansprüche 1 bis 12 als Außenbereichssensorleuchte zur Wand-, Decken- und/oder Ständermontage und/oder als Komponente eines elektrisch autarken Leuchtensystems.

14. Verwendung der Sensorleuchtenvorrichtung nach einem der Ansprüche 1 bis 12 als in einem Tür-Außenbereich vorsehbare Leuchteneinheit mit durch die Leuchtmitteleinheit (10) bewirkter Hausnummernbeleuchtung.

## Claims

1. A sensor lighting device having
a housing (30);
a light source unit (10);
a motion sensor unit (16) for emitting a motion capture signal when movement is detected;
ambient brightness capture means (18, 20) for capturing the ambient brightness; photovoltaic means (20);
electrical energy storage means (24) for storing the energy generated from the photovoltaic means (20); and
control means (14); wherein
the photovoltaic means (20), the electrical energy storage means (24) and the control means (14) are connected to the housing (30),
the light source unit (10) is suitable to be activated in response to a motion capture signal emitted by the motion sensor unit (16) in a motion-controlled operating mode for the duration of an activation period;
the ambient brightness capture means (18, 20) are suitable to influence an activation operation of the light source unit (10),
the control means (14) are designed to vary the duration of the activation period and to vary a luminous intensity of the light source unit (10) activated in the motion-controlled operating mode depending on an energy storage state of the electrical energy storage means (24);
**characterised in that**
the control means (14) are designed to vary the duration of the activation period and the luminous intensity of the light source unit (10) activated in the motion-controlled operating mode also depending on a time signal ascertained by the ambient brightness captured by the ambient brightness capture means (18, 20), wherein the ascertained time signal reproduces a current time within a day and/or night period.

2. The sensor lighting device according to claim 1, wherein
an energy supply of the sensor lighting device takes place without mains voltage and/or without connection to a mains voltage supply via the electrical energy storage means (24).

3. The sensor lighting device according to claim 1 or 2, wherein
the sensor lighting device also has means (26) for electronically capturing the energy storage state of the electronic energy storage means (24), wherein these means (26) are connected to the control means (14) and/or the sensor lighting device also has signalling means for particularly visually observable display of an energy storage state of the electronic storage means which lies above a predetermined supply threshold, wherein these signalling means are connected to the control means (14).

4. The sensor lighting device according to one of claims 1 to 3, wherein
the light source unit (10) has a plurality of LED light sources and wherein the control means (14) are designed to operate the plurality of LED light sources with an adjustable control current to control the luminous intensity.

5. The sensor lighting device according to one of claims 1 to 4, wherein
the control means (14) are designed to operate the light source unit (10) additionally in a non-motion-controlled operating mode, wherein this operating mode makes possible continuous operation of the light source unit (10) which is dependent on ambient brightness and/or on the ascertained time signal, independently of the motion capture signal, in particular with luminous intensity reduced via-à-vis a full-load operation of the light source unit (10).

6. The sensor lighting device according to claim 4 or 5, wherein
the plurality of LED light sources is arranged in groups as groups of LED light sources and the control means (14) are designed to actuate the groups of LED light sources selectively in order to illuminate different illumination areas in an area around the sensor lighting device.

7. The sensor lighting device according to one of claims 1 to 6, wherein
the photovoltaic means (20) are designed as a solar panel unit (20) on the housing which can be adjusted, preferably about at least one adjustment axis.

8. The sensor lighting device according to one of claims 1 to 7, wherein
the ambient brightness capture means (18, 20) are realised or influenced by an output signal of the photovoltaic means (20).

9. The sensor lighting device according to one of claims 1 to 8, wherein
the control means (14) are designed as load expectation signalling means for a future load operation of the electrical energy storage means (24) and are designed to generate a load expectation signal, wherein this load expectation signal makes possible a suitable control of the duration of the activation period and/or the luminous intensity of the light source unit (10) activated in response to the motion capture signal, on the basis of the captured minimum, maximum and/or average loading currents of the electrical energy storage means (24) and the time dependence thereof.

10. The sensor lighting device according to one of claims 1 to 9, wherein
the motion sensor unit (16) has a passive infrared detector (16) and operation of the motion sensor unit is dependent on the ascertained time signal and/or the captured ambient brightness.

11. The sensor lighting device according to one of claims 1 to 10, wherein
operation of the ambient brightness capture means (18, 20) is dependent on the ascertained time signal.

12. The sensor lighting device according to one of claims 1 to 11, wherein
the control means (14) are designed as motion expectation signalling means for predicting future motions in a period to be surveyed, and are designed to generate a motion expectation signal valid for a predetermined future period on the basis of past motion capture signals of the motion sensor unit (16) and the time dependence thereof, wherein this motion expectation signal makes possible a suitable control of the duration of the activation period and/or the luminous intensity of the light source unit (10) activated in response to the motion capture signal.

13. A use of the sensor lighting device according to one of claims 1 to 12 as outdoor area sensor lights for mounting on walls, ceilings and/or stands and/or as a component of an electrically independent lighting system.

14. A use of the sensor lighting device according to one of claims 1 to 12 as a lighting unit which can be provided in an outside region of a door with house number illumination effected by the light source unit (10).

## Revendications

1. Dispositif de lampe à capteur comportant
un boîtier (30) ;
une unité de moyen d'éclairage (10) ;
une unité de capteur de mouvement (16) pour émettre un signal de détection de mouvement en cas de mouvement détecté ;
des moyens de détection de luminosité ambiante (18, 20) pour détecter la luminosité ambiante ;
des moyens photovoltaïques (20) ;
des moyens électriques d'accumulation d'énergie (24) pour accumuler l'énergie produite à partir des moyens photovoltaïques (20) ; et
des moyens de commande (14) ; dans lequel
les moyens photovoltaïques (20), les moyens électriques d'accumulation d'énergie (24) ainsi que les moyens de commande (14) sont reliés au boîtier (30),
l'unité de moyen d'éclairage (10) est appropriée pour être activée, en réaction à un signal de détection de mouvement émis par l'unité de capteur de mouvement (16), dans un mode de fonctionnement commandé par mouvement pour la durée d'un laps de temps d'activation ;
les moyens de détection de luminosité ambiante (18, 20) sont appropriés pour influencer un fonctionnement d'activation de l'unité de moyen d'éclairage (10),
les moyens de commande (14) sont formés pour faire varier la durée du laps de temps d'activation et une intensité lumineuse de l'unité de moyen d'éclairage (10) activée dans le mode de fonctionnement commandé par mouvement, en fonction d'un état d'accumulateur d'énergie des moyens électriques d'accumulation d'énergie (24) ;
**caractérisé en ce que**
les moyens de commande (14) sont formés pour faire varier la durée du laps de temps d'activation et l'intensité lumineuse de l'unité de moyen d'éclairage (10) activée dans le mode de fonctionnement commandé par mouvement également en fonction d'un signal de temps obtenu à partir d'une luminosité ambiante détectée par les moyens de détection de luminosité ambiante (18, 20), dans lequel le signal de temps obtenu représente un instant courant à l'intérieur d'une période du jour et/ou de la nuit.

2. Dispositif de lampe à capteur selon la revendication 1, dans lequel
une alimentation en énergie du dispositif de lampe à capteur a lieu sans tension du secteur et/ou sans connexion à une alimentation de tension du secteur via les moyens électriques d'accumulation d'énergie (24)

3. Dispositif de lampe à capteur selon la revendication 1 ou 2, dans lequel
le dispositif de lampe à capteur comporte en outre des moyens (26) pour la détection électronique de l'état d'accumulateur d'énergie des moyens électriques d'accumulation d'énergie (24), dans lequel ces moyens (26) sont reliés aux moyens de commande (14) et/ou le dispositif de lampe à capteur comporte en outre des moyens de signalisation pour l'indication perceptible en particulier visuellement d'un état d'accumulateur d'énergie des moyens électroniques d'accumulation d'énergie situé au-dessus d'une valeur seuil d'alimentation prédéterminée, dans lequel ces moyens de signalisation sont reliés aux moyens de commande (14).

4. Dispositif de lampe à capteur selon l'une des revendications 1 à 3, dans lequel
l'unité de moyens d'éclairage (10) comporte une multiplicité de moyens d'éclairage à LED, et les moyens de commande (14) sont formés pour faire fonctionner la multiplicité de moyens d'éclairage à LED avec un courant de commande variable, pour commander l'intensité lumineuse.

5. Dispositif de lampe à capteur selon l'une des revendications 1 à 4, dans lequel
les moyens de commande (14) sont formés pour faire fonctionner l'unité de moyen d'éclairage (10) en supplément dans un mode de fonctionnement non commandé par mouvement, dans lequel ce mode de fonctionnement permet un fonctionnement continu de l'unité de moyen d'éclairage (10) dépendant de la luminosité ambiante et/ou dépendant du signal de temps obtenu, indépendamment du signal de détection de mouvement, en particulier avec une intensité lumineuse réduite par rapport à un fonctionnement à pleine charge de l'unité de moyen d'éclairage (10).

6. Dispositif de lampe à capteur selon la revendication 4 ou 5, dans lequel
la multiplicité de moyens d'éclairage à LED est disposée de manière groupée sous la forme de groupes de moyens d'éclairage à LED, et les moyens de commande (14) sont formés pour commander les groupes de moyens d'éclairage à LED sélectivement afin d'éclairer différentes zones d'illumination dans un environnement du dispositif de lampe à capteur.

7. Dispositif de lampe à capteur selon l'une des revendications 1 à 6, dans lequel
les moyens photovoltaïques (20) sont formés comme une unité de panneau solaire (20) réglable sur le boîtier, de préférence autour d'au moins un axe de réglage.

8. Dispositif de lampe à capteur selon l'une des revendications 1 à 7, dans lequel
les moyens de détection de luminosité ambiante (18, 20) sont réalisés ou influencés par un signal de sortie des moyens photovoltaïques (20).

9. Dispositif de lampe à capteur selon l'une des revendications 1 à 8, dans lequel
les moyens de commande (14) sont formés comme des moyens de signalisation d'attente de charge pour un chargement futur des moyens électriques d'accumulation d'énergie (24) et sont formés pour générer un signal d'attente de charge, dans lequel ce signal d'attente de charge permet, sur la base de courants de charge minimaux, maximaux et/ou moyens détectés des moyens électriques d'accumulation d'énergie (24) et de leur dépendance du temps, une commande appropriée de la durée du laps de temps d'activation et/ou de l'intensité lumineuse de l'unité de moyen d'éclairage (10) activée en réaction au signal de détection de mouvement.

10. Dispositif de lampe à capteur selon l'une des revendications 1 à 9, dans lequel
l'unité de capteur de mouvement (16) comporte un détecteur à infrarouge passif (16), et un fonctionnement de l'unité de capteur de mouvement est dépendante du signal de temps obtenu et/ou de la luminosité ambiante détectée.

11. Dispositif de lampe à capteur selon l'une des revendications 1 à 10, dans lequel
un fonctionnement des moyens de détection de luminosité ambiante (18, 20) est dépendant du signal de temps obtenu.

12. Dispositif de lampe à capteur selon l'une des revendications 1 à 11, dans lequel
les moyens de commande (14) sont formés comme des moyens de signalisation d'attente de mouvement pour prédire des mouvements futurs dans un laps de temps appréciable et sont formés pour générer un signal d'attente de mouvement valable sur la base de signaux de détection de mouvement passés de l'unité de capteur de mouvement (16) et de sa dépendance du temps pour un laps de temps futur prédéfini, dans lequel ce signal d'attente de mouvement permet une commande appropriée de la durée du laps de temps d'activation et/ou de l'intensité lumineuse de l'unité de moyen d'éclairage (10) activée en réaction au signal de détection de mouvement.

13. Utilisation du dispositif de lampe à capteur selon l'une des revendications 1 à 12 comme lampe à capteur de zone extérieure pour un montage sur un mur, un plafond et/ou une colonne et/ou comme composant d'un système de lampe électriquement autonome.

14. Utilisation du dispositif de lampe à capteur selon l'une des revendications 1 à 12 comme unité de lampe pouvant être prévue dans une zone extérieure de porte, avec un éclairage de numéro de maison provoqué par l'unité de moyen d'éclairage (10).
